# EUROPEAN PATENT SPECIFICATION

(11) **EP 1 519 381 B1**
(45) Date of publication and mention of the grant of the patent: **12.10.2011**
(21) Application number: 04103943.9
(22) Date of filing: 17.08.2004
(51) Int. Cl.: G11B 27/034, G11B 27/34, H04N 5/76, G11B 20/10, G11B 20/00

(54) **Apparatus and method for recording digital image data**
Vorrichtung und Verfahren zur Aufzeichnung digitaler Bilddaten
Appareil d'enregistrement et de lecture d' images vidéo numériques

(30) Priority: 20.08.2003 KR 2003057572
(43) Date of publication of application: 30.03.2005
(73) Proprietor: SAMSUNG ELECTRONICS CO., LTD., Suwon-City, Kyungki-do (KR)
(72) Inventor: Kim, Chul-min 111-703, Sinyeongtong Hyundai Town, Gyeonggi-do (KR)
(74) Representative: Walaski, Jan Filip

(56) References cited:
- EP-A- 1 195 995
- EP-A2- 1 047 074
- JP-A- 10 257 422
- JP-A- 2000 341 627
- US-A1- 2002 127 000
- US-A1- 2003 099 460
- AXONIX: "Superview : Administrator's manual version 1.1" AXONIX, [Online] 2002, XP002326444 Retrieved from the Internet: URL:http://www.axonix.com/superview/downlo ads/docs/SVMNL_V1_1_CC12_PDF.pdf> [retrieved on 2005-04-27]
- WWW.COMPRESSION-LINKS.INFO: "Compression links : EZ transcoder" INTERNET ARTICLE, [Online] 7 March 2003 (2003-03-07), XP002326445 Retrieved from the Internet: URL:http://www.compression-links.info/Link /1664> [retrieved on 2005-04-25]

## Description

The present invention relates to a media recording device and associated method for storing data comprising means operable to compress data at a first compression rate and to store the compressed data.

With the launch of digital satellite and terrestrial broadcasting systems, high quality videos can be transmitted with very little or no perceptible loss of picture quality. Unlike analogue broadcasting systems, with digital broadcasting systems, further information can be transmitted alongside the picture and sound information. This allows a viewer to access a variety of additional features. For example, a viewer can access a variety of different entertainment platforms using digital broadcasting. Due to these advantages, there has been growing interest in recording and playback devices (sometimes referred to as an image recording and reproducing apparatus) utilising high quality video such as those used in digital broadcasting.

In general, a recording and playback device may be a video cassette recorder (VCR), a digital video disc player/recorder (DVDP), or a digital video recorder (DVR).

The DVR is in increasing demand because it can record and playback videos (and sound) from terrestrial broadcasting, satellite broadcasting, cable broadcasting and network broadcasting over the Internet. Since the DVR records the videos (and sounds) as files containing video data in a hard disc drive (HDD), performing a file search for playback is simple, and degradation of the image quality seldom occurs even if the video is repeatedly played back.

However, the HDD has limited storage capacity. Therefore, the DVR compresses the video data for more space-effective storage, usually employing a moving picture experts group (MPEG) format which is an efficient compression method.

Previously, audio was the main source of public entertainment. However, the use of videos for entertainment is increasing. Therefore, there is a desire to increase the number of video files recorded on the HDD. Moreover, due to the amount of data required to represent high quality video, the DVR may reach its storage capacity limit quickly even if provided with a high capacity HDD.

When the size of the stored videos reaches the capacity of the HDD (or any recording medium), some stored videos should be deleted. Alternatively, the HDD can be replaced with one having a larger capacity, or an extra HDD (or other recording medium) can be added. However, the stored videos are sometimes reluctantly deleted, and additional expense is incurred for a replacement or additional HDD.

An aspect of the present invention is to address the above problems and to provide at least the advantages described below.

European patent application number EP-A-1,195,995 describes a media recording device which records data at a compressed rate and is able to recompress stored data at a higher compression rate.

Japanese patent application number JP 2000-341627 A discloses a recording device in which recorded data is re-compressed at a higher compression rate at periodic intervals or when it is determined that the recording device has insufficient capacity to accommodate scheduled recordings.

According to an aspect of the present invention there is provided an image recording and reproducing apparatus according to claim 1.

According to a further aspect of the present invention, there is provided a method of recompressing data according to claim 8.

The apparatus and method of the present invention provide the advantage that a user has the opportunity to reduce the amount of storage space taken up by a video without actually deleting the video. This gives the user flexibility to keep videos they may previously have had to delete or buy a new storage medium to keep.

The term "compression rate" refers to the amount of compression that is effected, for example in terms of the reduction in data quantity, perhaps expressed as a fraction or percentage.

Preferably, the device is operable to store the recompressed data in replacement of the compressed data. By "replacement", this does not necessarily mean that the recompressed version will physically overwrite the compressed version. However, instead of the recording device accessing the compressed version of the video, it will access the recompressed version of the video when playing back the stored video.

The device can be controlled to store said recompressed data after the device experiences a power down event. In other words, the recompression of the data may occur when the recorder is put into "standby".

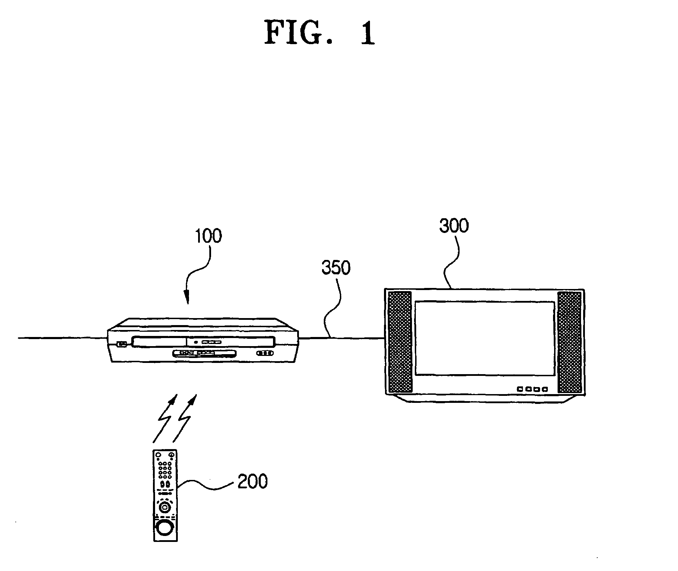

An embodiment of the present invention will now be described, by way of example only, and with reference to the accompanying drawings, in which:
Figure 1 is a view of a display system connected to a recording/playback device according to an embodiment of the present invention;
Figure 2 is a block diagram of the recording/playback device of Figure 1 according to an embodiment of the present invention;
Figures 3A to 3D are images illustrating example screen shots of a menu screen used for re-compressing and re-recording data; and
Figure 4 is a flowchart illustrating a method for re-compressing and re-recording data according to an embodiment of the present invention.
Referring to Figure 1, a recording/playback device 100 is connected to a television (TV) 300, which is used as a display, by a transmission cable 350. The recording/playback device 100 is operated using a remote controller 200, which is an external device, and passes appropriate signals to the TV 300 to display videos and produce sounds.

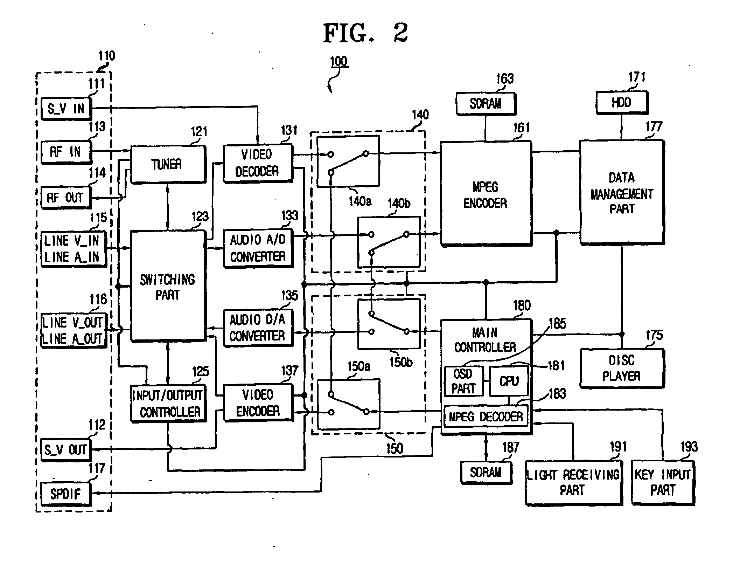

Referring to Figure 2, the recording/playback device 100 comprises an input/output terminal part 110, a switching part 123, a first switch part 140, a second switch part 150, a moving picture experts group (MPEG) encoder 161, a hard disc drive (HDD) 171, and a main controller 180.

The input/output terminal part 110 receives signals from different sources, and outputs the received signals and a signal reproduced from the HDD 171 and a disc player 175.

The input/output terminal part 110 includes a super-video input terminal (S-V IN) 111, a super-video output terminal (S-V OUT) 112, a radio frequency input terminal (RF IN) 113, a radio frequency output terminal (RF OUT) 114, a line video and audio input terminal (LINE V_IN, LINE A_IN) 115, a line video and audio output terminal (LINE V_OUT, LINE A_OUT) 116, and a serial parallel digital interface (SPDIF) 117.

A tuner 121 tunes to a channel so that the appropriate signal can be received through the RF input terminal 113. The tuner 121 tunes to a channel requested by an input/output control part 125. The input/output control part 125 is controlled by the main controller 180. The switching part 123, which is controlled by the input/output control part 125, selectively controls the input/output terminals connected to the switching part 123 so that different combinations of the input/output terminals can be connected with one another.

A video decoder 131, controlled by the main controller 180, decodes and converts the analogue signal received through the super video input terminal or the switching part 123, into a digital video signal. The digital video signal is output from the video decoder 131 to an MPEG encoder 161 through a first video path switch 140a of the first switch part 140. The first video path switch 140a is controlled by the main controller 180.

An audio analogue-to-digital converter 133 converts the analogue audio signal input through the switching part 123 to a digital audio signal. The digital audio signal is input to the MPEG encoder 161 through a first audio path switch 140b of the first switch part 140. The first audio path switch 140b is controlled by the main controller 180.

The MPEG encoder 161, receives the digital video signal from the video decoder 131 and the digital audio signal from the audio analogue-to-digital converter 133 through the first switch part 140. The MPEG encoder 161 encodes the signals using a compression format and rate set by the main controller 180. The encoded signals are stored in the HDD 171. Preferably, the MPEG encoder 161 uses the MPEG-2 format, although the invention is not so limited. As an example, if the digital video and audio signals are recorded using MPEG-2 at a standard definition (SD) bitrate of 6Mbps, 3 Giga byte (GB) of storage is required for a one-hour recording.

Although the HDD 171 is used as an example in this embodiment, it will be appreciated that other recording media such as an optical recording medium or a semiconductor memory could equally be used.

A synchronous dynamic random-access memory (SDRAM) 163 is used as a buffer to temporarily store the data encoded by the MPEG encoder 161.

A data management part 177 manages recording and playback of the data onto and from the HDD 171 or the disc player 175. A light receiving part 191 receives operation signals from the remote controller 200 and outputs the operation signal to the main controller 180.

The main controller 180 may be a single-chip integrated circuit (IC) comprising a central processing unit (CPU) 181, an MPEG decoder 183 for decoding data compressed in the MPEG format, and an on screen display (OSD) part 185 for generating data corresponding to a menu. The MPEG decoder 183 and the OSD part 185 may equally be separate chips respectively connected to the main controller 180.

The MPEG decoder 183 decodes the MPEG compressed data so as to restore and output the original digital video and audio signals, respectively. The digital video signal output from the MPEG decoder 183 is input to a video encoder 137 through a second video path switch 150a of the second switch part 150. The second video path switch 150a is controlled by the main controller 180. The digital audio signal output from the MPEG decoder 183 is input to a digital-to analogue converter 135 via a second audio path switch 150b of the second switch part 150. The second audio path switch 150b is controlled by the main controller 180.

The video encoder 137, receives the digital video signal output by the MPEG decoder 183 via the second video path switch 150a. The digital video signal is converted to an analogue video signal which is output to the switching part 123. The digital-to-analogue converter 135, receives the digital audio signal output from the MPEG decoder 183 via the second audio path switch 150b. The digital-to-analogue converter 135 converts the digital audio signal to an analogue audio signal which is output to the switching part 123.

Hereinbelow, there will be explained processes for re-compressing using high compression rates and re-recording in the HDD 171 the data which was previously compressed by the MPEG-2 format and recorded in the HDD 171.

When the user instructs the main controller 180 to commence operating the image recording and reproducing apparatus in an 'edit' mode, the OSD part 185 is instructed by the main controller 180 to output an edit menu. The user may instruct the main controller 180 using operation buttons provided on the remote controller 200 or a key input part 193. The light receiving part 191 or the key input part 193 then transmits the user's command to the main controller 180. The output 'edit' menu is transmitted to the TV 300 through the second video path switch 150a, the video encoder 137, the switching part 123, and the line video and audio output terminal 116, and as a result, the 'edit' menu screen is displayed on the TV 300.
The user then moves a cursor on the 'edit' screen displayed on the TV 300 using direction keys on the remote controller 200 or the key input part 193, and selects menus highlighted by the cursor using a 'confirmation' key. The main controller 180 controls the OSD part 185 to display or change the menu screens, characters, symbols, and pictures according to a user's command.

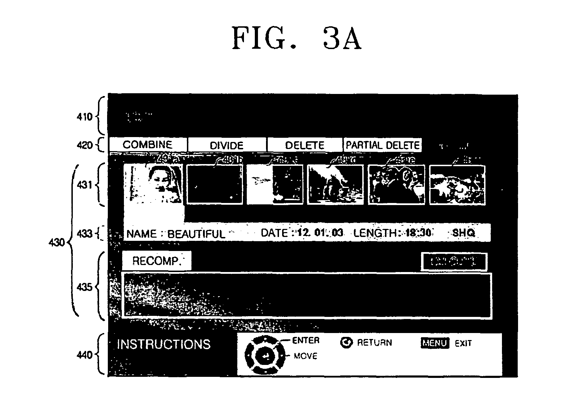

Figures 3A to 3D are images illustrating examples of re-compressed and re-stored data, using the 'edit' menu screen displayed on the TV 300. Since the image recording and reproducing apparatus is set in the edit mode, the TV 300 displays the menu screen in the 'edit' mode, as shown in Figure 3A. The word 'Edit' is displayed on top of the menu screen, indicating the menu item 410 currently displayed on the menu screen. Additionally, 'Instructions' is displayed on the bottom 440 of the menu screen providing a link for guidance around the screen using the keys.

Information about the keys of the remote controller 200 and the functions of the keys is also displayed at the bottom 440 of the menu screen.

Sub-menus 420 for the current menu item 410 are displayed under the current menu item 410. In Figure 3A, items of 'Combine', 'Divide', 'Delete', 'Partial Delete', and 'Recomp(ression)' are illustrative of sub-menus of the 'Edit' menu. When a user places the cursor on the 'Recomp' menu using the direction keys of the key input part 193 or the remote controller 200, the main controller 180 controls the data management part 177 to read information about the video data stored in the HDD 171. The information about the video data may comprise the first (or representative key) frame of the video data, the title, the date of storage, running time and video quality. The main controller 180 controls the OSD part 185 to output a signal corresponding to the information, and the output signal is transmitted to the TV 300 via the second video path switch 150a, the video encoder 137, the switching part 123, and the line video and audio output terminal 116.

The data information is displayed on a 'Recomp' window 430 as shown in Figure 3A. The 'Recomp' window 430 displays a video data list 431 currently stored in the HDD 171 by horizontally showing the first (or representative key) frame 431 a to 431f of respective video data. If the user moves the cursor downward on the 'Recomp' window using direction keys, the cursor is placed on the video data list 431, and video data information 433. The video item highlighted by the cursor is displayed at the bottom of the data list 431. More specifically, the cursor is placed on the first image 431a of the first video data such that the title, the date of storage, the running time and the image quality of the first video data are displayed as the video data information 433 shown in Figure 3A.

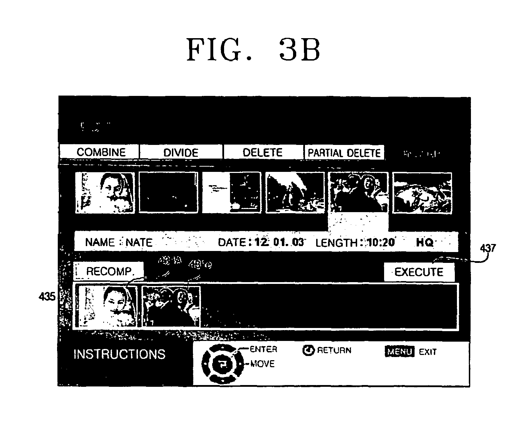

The user can move the cursor in a horizontal direction to highlight different video data. The user then presses the confirmation key to select the video data file for re-compression. The first (or representativekey) frame of the selected video data is displayed in a re-compression video data list 435. Figure 3B illustrates a resultant re-compression list displaying the first image 431 a and 431e from the first and fifth video data file as selected from the data list 431.

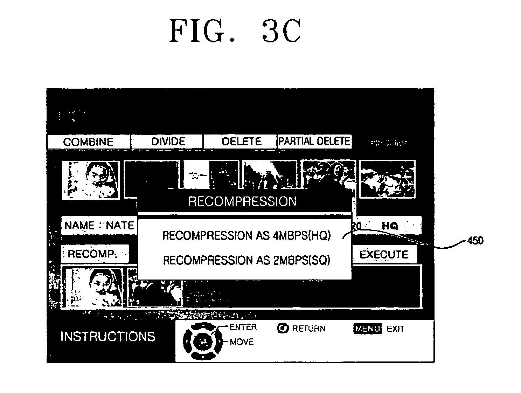

In order to re-compress the selected data, a user moves the cursor down using the direction key and places the cursor on the 'Execute' icon 437, and presses the confirmation key. As shown in Figure 3C, a re-compression rate-setting window 450 appears in the centre of the screen. For example, a high-quality (HQ) method records the digital video and audio signals using 4Mbps bitrate, and a standard-quality (SQ) method records the signals using 2Mbps bitrate.

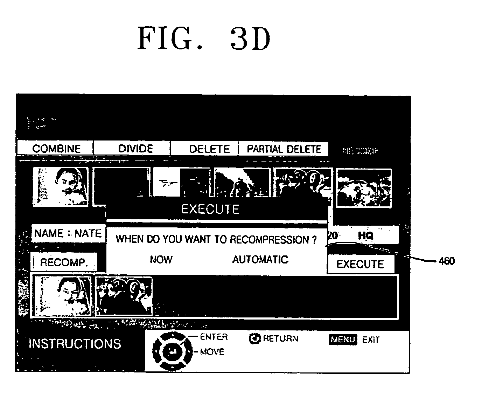

When either one of the two compression rates displayed on the re-compression rate setting window 450 is selected by the user using the direction keys and the 'confirmation' key, a re-compression time setting window 460 is displayed in the center of the screen. The re-compression time setting window 460 is shown in Figure 3D and allows the user to determine when the re-compression should take place. If the user selects 'Now', re-compression of the selected data begins immediately. If the user selects 'Automatic', the selected video data will be re-compressed after the main switch of the image recording and reproducing apparatus is turned off by the user. This means that the video data re-compression is performed when the image recording and reproducing apparatus is not in use since a large amount of time will be taken for the data re-compression. Therefore, the inconvenience of not being able to use the image recording and reproducing apparatus during data re-compression can be prevented.

After the user selects video data from amongst the video data stored in the HDD 171 for re-compression, and sets the re-compression rate and time, the process of which was previously described, the image recording and reproducing apparatus performs re-compression with respect to the selected video data according to the selected re-compression rate and time. Hereinbelow, the processes for re-compression of the image recording and reproducing apparatus will be described in greater detail.

If the user sets 'Now' as the re-compression time, the image recording and reproducing apparatus performs re-compression of the selected data at once. Accordingly, the main controller 180 controls the selected data stored in the HDD 171 so that it is transmitted to the MPEG decoder 183 via the data management part 177. The MPEG decoder 183 decodes the received MPEG-2 data to restore the digital video and audio signals. The digital video and audio signals are then output. The digital video signal output from the MPEG decoder 183 is fed into the MPEG encoder 161 via the second video path switch 150a and the first video path switch 140a. The digital audio signal output from the MPEG decoder 183 is input to the MPEG encoder 161 via through the second audio path switch 150b and the first audio path switch 140b. The main controller 180 controls the first and the second switch parts 140 and 150 so that a data transmission path is provided for the digital video and audio signals output from the MPEG decoder 183. The digital video and audio signals are then fed to the MPEG encoder 161.

The MPEG encoder 161 re-compresses and re-stores the input digital video and audio signals according to the re-compression rate to the HDD 171. If the digital video and audio signals are recorded using 4Mbps or 2Mbps bitrate, 2GB or 1GB is required for 1-hour recording, respectively. When recording using MPEG-4 with 1Mbps bitrate, 0.5GB is required for 1-hour recording. Accordingly, if certain data previously recorded using 6Mbps bitrate is re-compressed using 4Mbps or 2Mbps or 1Mbps, the required storage capacity of the recording medium decreases to 2/3, 1/3 or 1/6, of the previously required amount respectively. Although image quality deteriorates when the compression rate is high, because video which has been previously watched is rarely watched again, the image quality is not so important, and thus re-compressing and re-storing a previously watched video using a high compression rate is a very effective way of utilizing the storage medium.

If the user selects 'Automatic' for the re-compression time, the main controller 180 stores the list of the selected data to the SDRAM 187. Such selected data is re-compressed when the user turns off the main switch of the image recording and reproducing apparatus. The re-compression is performed in the same manner as the re-compression according to the 'Now' re-compression time.

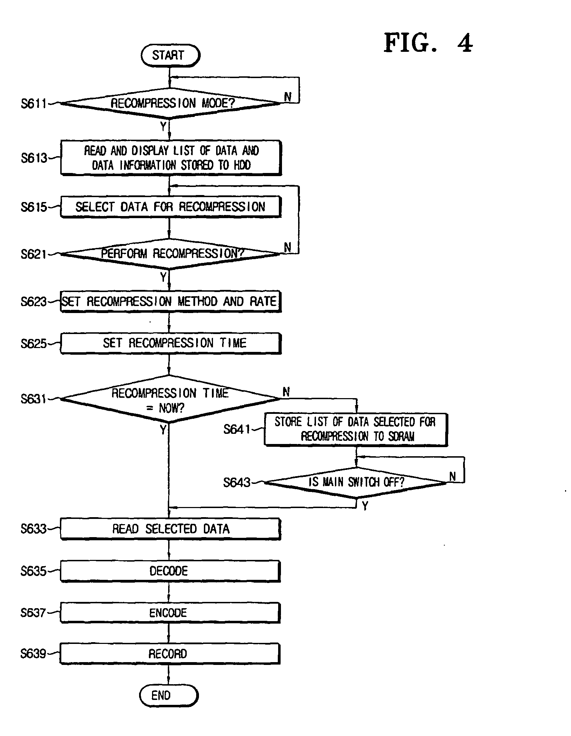

Referring to Figure 4, when the user sets the 'Edit' mode using the operation buttons provided on the remote controller 200 or the key input part 193, a menu screen showing the edit mode is displayed on the TV 300. When the 'Recomp' item, from amongst the sub-menus of the displayed edit menu, is selected by the user, the re-compression mode begins in step S611.

In the re-compression mode, the main controller 180 controls the data management part 177 to read information about MPEG data stored to the HDD 171. The main controller 180 controls the OSD part 185 to output a signal corresponding to the read information. The output signal is transmitted to the TV 300 via the second video path switch 150a, the video encoder 137, the switching part 123, and the line video and audio output terminal 116. The data information may comprise the first (or representative) image of the video, the title, the date of storage, running time and image quality. These are displayed in the 'Recomp' window 430. The 'Recomp' window 430 displays the list of videos 431 currently stored in the HDD 171 and the data information about the video highlighted by the cursor, such as the title, the date of stroage, the running time and the image quality in step S613. The user moves the cursor around the video data list, highlighting the video data to be re-compressed, and presses the confirmation key, thereby selecting the data that will be re-compressed in step S615.

In order to re-compress the data selected in step S615, the user has to move the cursor down using the direction key and place the cursor on the 'Execute' icon 437, and press the confirmation key to execute the command. The main controller 180 detects whether there is an execution command from the user in step S621. When there is an execution command input by the user, the re-compression rate setting window 450 is displayed in the centre of the screen. The user can select one of the two compression rates, e.g., the HQ method using the 4Mbps bitrate or the SQ method using 2Mbps bitrate, displayed on the re-compression rate setting window 450. This selection is made using the direction keys and the confirmation key in step S623.

When the user selects the compression rate, the re-compression time setting window 460 is displayed in the centre of the screen. The user selects between the 'Now' and 'Automatic' schedule for compressing the data in step S625.
If the user selects 'Now', re-compression of the selected data begins immediately in step S631. Therefore, the main controller 180 controls the selected video stored in the HDD 171 to be fed to the MPEG decoder 183 via the data management part 177 in step S633.

The MPEG decoder 183 decodes the received MPEG-2 data so as to restore the digital video and audio signals. The restored signals are then output from the MPEG decoder 183. The digital video signal output from the MPEG decoder 183 is input to the MPEG encoder 161 via the second video path switch 150a and the first video path switch 140a. The digital audio signal output from the MPEG decoder 183 is input to the MPEG encoder 161 via the second audio path switch 150b and the first audio path switch 140b. The main controller 180 controls the first and the second switch parts 140 and 150 to generate a video data transmission path such that the digital video and audio signals output from the MPEG decoder 183 can be input to the MPEG encoder 161 in step S635.

The MPEG encoder 161 re-compresses the input digital video and audio signals according to the compression rate set by the user in step S637, and re-stores the signals to the HDD 171 in step S639. If the digital video and audio signals are recorded using the 4Mbps, 2Mbps or 1Mbps bitrate, 2GB, 1GB or 0.5GB storage space is required, respectively for a 1-hour recording. If certain video recorded using the 6Mbps bitrate and requiring 3GB for 1-hour recording, is re-compressed using 4Mbps, 2Mbps or 1Mbps, requirements for the storage capacity of the recording medium decrease respectively to 2/3, 1/3 or 1/6 of that originally required, thereby enabling effective use of the storage capacity of the recording medium.

In step 631, if the user selects 'Automatic' for the re-compression time, the main controller 180 stores the list of the selected data to the SDRAM 187 in step S641. After this, when the user turns off the main switch of the image recording and reproducing apparatus, the selected data start to be re-compressed in step S643. The re-compression is performed as in steps S633 to S639.

As can be appreciated from the above, in certain embodiments of the present invention, video previously compressed and recorded in the recording medium can be re-compressed and re-recorded at higher compression rates. Accordingly, many inconveniences of having to delete pre-stored data for additional storage, replace the storage medium with the one of larger capacity, or add an extra storage medium when video data exceeds the capacity of the storage medium in use, can be prevented, and therefore, storage capacity of the storage medium of the present invention can be very efficiently used.

## Claims

1. An image recording and reproducing apparatus (100), comprising:
- an encoder (161) for compressing digital image data input from a source;
storage means (171) for storing compressed data;
- a decoder (183) for expanding compressed image data from the storage means (171) and outputting digital image data; and
- control means (181) for controlling recording of data to said storage means;
and
- first switching means (140), controlled by the control means (181), for switching the source of the image data input to the encoder (161) between image data received by the apparatus (100) and image data output by the decoder (183);
the control means (181) having a first mode of operation in which it is arranged to control the first switching means (140) to provide image data received by the apparatus (100) to the encoder (161) and to control the encoder to compress the provided image data at a first bit rate, and having a second mode of operation in which it is arranged to control the first switching means (140) to provide image data output by the decoder (183), that was previously compressed at the first bit rate and stored in the storage means (171), to the encoder (161) and to control the encoder to recompress the provided image data at a second bit rate lower than the first bit rate,
the control means further configured to receive a recompression time setting indicating when the image data is to be recompressed and the encoder arranged to store the image data resulting from the compression or recompression in the storage means (171);
**characterised by**:
the control means (181) being configured to:
if the recompression time setting is a first setting, control the encoder to recompress the selected digital image data immediately with respect to receipt of the recompression time setting; and
if the recompression time setting is a second setting, record a list (431) of the selected digital image data in a memory (187) and control the encoder to recompress the image data in the list (431) when the apparatus is in a standby mode of operation,
wherein the control means (181) is further configured to receive a selection from a user of one of a plurality of values, presented to the user, of the bit rate to which the selected image data is to be recompressed.

2. An apparatus (100) according to claim 1, further comprising :
an input signal conversion means (131, 133) for converting input analogue image data received by the apparatus (100) into digital image data and for transmitting the digital image data to the encoder (161); and
an output signal conversion means (135, 137) for converting the digital image data output from the decoder (183) into analogue image data.

3. An apparatus (100) according to claim 1 or 2 further comprising second switching means (150) for switching the destination of the output of the decoder (183) between the input of the encoder (161) and the output signal conversion means (135, 137), the second switching means (150) being arranged to switch the destination of output of the decoder (183) to the input of the encoder (161) upon the apparatus (100) receiving a recompression command signal.

4. An apparatus (100) according to any preceding claim whereon said apparatus (100) is operable to store said data compressed at said second bit rate in replacement of said data compressed at said first bit rate.

5. An apparatus (100) according to any one of the preceding claims, wherein the data compressed at the first bit rate is of a Moving Picture Experts Group (MPEG)-2 format, and the data compressed at the second bit rate is of a MPEG-4 format.

6. A method of recompressing data in an image recording and reproducing apparatus (100) having an encoder (161) for compressing digital image data input from a source, storage means (171) for storing compressed data, and a decoder (183) for expanding compressed image data from the storage means (171) and for outputting digital image data, the method comprising:
- a first mode of operation in which the source of the data input to the encoder (161) is image data received by the apparatus (100) and the received data is compressed a t a first bit rate and stored in the storage means (171); and
receiving a recompression time setting indicating when image data selected by a user, output by the decoder (183) that was previously compressed at the first bit rate is to be recompressed at a second bit rate; and
wherein, at a time indicated by the recompression time setting, the method comprising a second mode of operation in which :
the source of the image data input to the encoder (161) is switched to be image data obtained from the storage means (171) and output by the decoder (183); and
the image data output by the decoder (183) is recompressed at a second bit rate and stored in the storage means (171), the second bit rate being lower than the first bit rate.
**characterised by**:
if the recompression time setting is a first setting, recompressing the selected digital image data immediately with respect to receipt of the recompression time setting; and
if the recompression time setting is a second setting, recording a list (431) of the selected digital image data in a memory (187) and recompressing the digital image data in the list (431) when the apparatus is in a standby mode of operation,
the method further comprising receiving a selection from a user of one of a plurality of values, presented to the user of the bit rate to which the selected data is to be recompressed.

7. A method according to claim 6, wherein the data compressed at the first bit rate is of a Moving Picture Experts Group (MPEG)-2 format, and the data compressed at the second bit rate is of an MPEG-4 format.

## Patentansprüche

1. Bildaufzeichnungs- und -reproduktionsgerät (100), umfassend:
- einen Codierer (161) zum Komprimieren digitaler Bilddaten, die von einer Quelle eingegeben werden;
- Speichermittel (171) zum Speichern komprimierter Daten;
- einen Decodierer (183) zum Entpacken komprimierter Bilddaten von dem Speichermittel (171) und Ausgeben digitaler Bilddaten; und
- Steuermittel (181) zum Steuern der Aufzeichnung von Daten auf dem Speichermittel; und
- erste Umschaltmittel (140), die von dem Steuermittel (181) gesteuert werden, zum Umschalten der Quelle der Bilddaten, die in den Codierer (161) eingegeben werden, zwischen Bilddaten, die von dem Gerät (100) empfangen werden, und Bilddaten, die von dem Decodierer (183) ausgegeben werden;
wobei das Steuermittel (181) einen ersten Betriebsmodus aufweist, in dem es angeordnet ist, um das erste Umschaltmittel (140) zum Bereitstellen von Bilddaten, die von dem Gerät (100) empfangen werden, für den Codierer (161) zu steuern und um den Codierer zum Komprimieren der bereitgestellten Bilddaten bei einer ersten Bitrate zu steuern, und einen zweiten Betriebsmodus aufweist, in dem es angeordnet ist, um das erste Umschaltmittel (140) zum Bereitstellen von von dem Decodierer (183) ausgegebenen Bilddaten, die vorher bei der ersten Bitrate komprimiert und in dem Speichermittel (171) gespeichert wurden, für den Codierer (161) zu steuern und um den Codierer zum Wiederkomprimieren der bereitgestellten Bilddaten bei einer zweiten Bitrate, die niedriger als die erste Bitrate ist, zu steuern,
wobei das Steuermittel ferner konfiguriert ist, um eine Wiederkomprimierungs-Zeiteinstellung zu empfangen, die anzeigt, wann die Bilddaten zu wiederkomprimieren sind, und der Codierer angeordnet ist, um die Bilddaten, die aus dem Komprimieren oder Wiederkomprimieren resultieren, in dem Speichermittel (171) zu speichern;
**gekennzeichnet dadurch:**
**dass** das Steuermittel (181) konfiguriert ist zum:
Steuern, wenn die Wiederkomprimierungs-Zeiteinstellung eine erste Einstellung ist, des Codierers zum Wiederkomprimieren der ausgewählten digitalen Bilddaten unmittelbar in Bezug auf den Empfang der Wiederkomprimierungs-Zeiteinstellung; und Aufzeichnen, wenn die Wiederkomprimierungs-Zeiteinstellung eine zweite Einstellung ist, einer Liste (431) der ausgewählten digitalen Bilddaten in einem Speicher (187) und Steuern des Codierers zum Wiederkomprimieren der Bilddaten in der Liste (431), wenn das Gerät in einem Bereitschafts-Betriebsmodus ist,
wobei das Steuermittel (181) ferner konfiguriert ist zum Empfangen einer Auswahl, von einem Benutzer, eines einer Vielzahl von Werten der Bitrate, die dem Benutzer präsentiert werden, auf die die ausgewählten Bilddaten zu wiederkomprimieren sind.

2. Gerät (100) nach Anspruch 1, ferner umfassend:
ein Eingangssignal-Umwandlungsmittel (131, 133) zum Umwandeln eingegebener analoger Bilddaten, die von dem Gerät (100) empfangen werden, in digitale Bilddaten und zum Übertragen der digitalen Bilddaten an den Codierer (161); und
ein Ausgangssignal-Umwandlungsmittel (135, 137) zum Umwandeln der digitalen Bilddaten, die von dem Decodierer (183) ausgegeben werden, in analoge Bilddaten.

3. Gerät (100) nach Anspruch 1 oder 2, ferner umfassend zweite Umschaltmittel (150) zum Umschalten des Ausgangsziels des Decodierers (183) zwischen dem Eingang des Codierers (161) und dem Ausgangssignal-Umwandlungsmittel (135, 137), wobei das zweite Umschaltmittel (150) angeordnet ist zum Umschalten des Ausgangsziels des Decodierers (183) zu dem Eingang des Codierers (161), nachdem das Gerät (100) ein Wiederkomprimierungs-Befehlssignal empfängt.

4. Gerät (100) nach einem der vorstehenden Ansprüche, wobei das Gerät (100) betriebsfähig ist, um die bei der zweiten Bitrate komprimierten Daten im Austausch gegen die bei der ersten Bitrate kompensierten Daten zu speichern.

5. Gerät (100) gemäß einem der vorhergehenden Ansprüche, wobei die bei der ersten Bitrate komprimierten Daten ein Moving-Picture-Experts-Group-(MPEG)-2-Format aufweisen und die bei der zweiten Bitrate komprimierten Daten ein MPEG-4-Format aufweisen.

6. Verfahren zum Wiederkomprimieren von Daten in einem Bildaufzeichnungs- und -reproduktionsgerät (100) mit einem Codierer (161) zum Komprimieren digitaler Bilddaten, die von einer Quelle eingegeben werden, Speichermitteln (171) zum Speichern komprimierter Daten und einem Decodierer (183) zum Entpacken komprimierter Bilddaten von dem Speichermittel (171) und zum Ausgeben digitaler Bilddaten, das Verfahren umfassend:
- einen ersten Betriebsmodus, in dem die Quelle der in den Codierer (161) eingegebenen Daten von dem Gerät (100) empfangene Bilddaten sind und die empfangenen Daten bei einer ersten Bitrate komprimiert und in dem Speichermittel (171) gespeichert werden; und
Empfangen einer Wiederkomprimierungs-Zeiteinstellung, die anzeigt, wann von einem Benutzer ausgewählte, von dem Decodierer (183) ausgegebene Bilddaten, die vorher bei der ersten Bitrate komprimiert wurden, bei einer zweiten Bitrate zu wiederkomprimieren sind; und
wobei, zu einer Zeit, die von der Wiederkomprimierungs-Zeiteinstellung angezeigt wird, das Verfahren einen zweiten Betriebsmodus umfasst, in dem:
die Quelle der Bilddaten, die in den Codierer (161) eingegeben werden, umgeschaltet wird, um von dem Speichermittel (171) erhaltene und von dem Decodierer (183) ausgegebene zu sein; und
die von dem Decodierer (183) ausgegebenen Bilddaten bei einer zweiten Bitrate wiederkomprimiert und in dem Speichermittel (171) gespeichert werden, wobei die zweite Bitrate niedriger als die erste Bitrate ist,
**gekennzeichnet durch**:
Wiederkomprimieren, wenn die Wiederkomprimierungs-Zeiteinstellung eine erste Einstellung ist, der ausgewählten digitalen Bilddaten unmittelbar in Bezug auf den Empfang der Wiederkomprimierungs-Zeiteinstellung; und
Aufzeichnen, wenn die Wiederkomprimierungs-Zeiteinstellung eine zweite Einstellung ist, einer Liste (431) der ausgewählten digitalen Bilddaten in einem Speicher (187) und Wiederkomprimieren der digitalen Bilddaten in der Liste (431), wenn das Gerät in einem Bereitschafts-Betriebsmodus ist,
das Verfahren ferner umfassend Empfangen einer Auswahl, von einem Benutzer, eines einer Vielzahl von Werten der Bitrate, die dem Benutzer präsentiert werden, auf die die ausgewählten Daten zu wiederkomprimieren sind.

7. Verfahren nach Anspruch 6, wobei die bei der ersten Bitrate komprimierten Daten ein Moving-Picture-Experts-Group-(MPEG)-2-Format aufweisen und die bei der zweiten Bitrate komprimierten Daten ein MPEG-4-Format aufweisen.

## Revendications

1. Appareil d'enregistrement et de reproduction d'images (100), comprenant :
- un codeur (161) pour compresser des données d'image numériques entrées depuis une source ;
- un moyen de mémorisation (171) pour mémoriser des données compressées ;
- un décodeur (183) pour décompresser les données d'image compressées provenant du moyen de mémorisation (171) et produire en sortie des données d'image numériques ; et
- un moyen de commande (181) pour commander l'enregistrement de données dans ledit moyen de mémorisation ;
et
- un premier moyen de commutation (140), commandé par le moyen de commande (181), pour commuter la source des données d'image entrées dans le codeur (161) entre les données d'image reçues par l'appareil (100) et les données d'image produites en sortie par le décodeur (183) ;
le moyen de commande (181) ayant un premier mode de fonctionnement dans lequel il est fait en sorte de commander le premier moyen de commutation (140) afin de fournir les données d'image reçues par l'appareil (100) au codeur (161) et de commander le codeur afin de compresser les données d'image fournies à un premier débit binaire, et ayant un second mode de fonctionnement dans lequel il est fait en sorte de commander le premier moyen de commutation (140) afin de fournir les données d'image produites en sortie par le décodeur (183), qui ont été précédemment compressées au premier débit binaire et mémorisées dans le moyen de mémorisation (171), au codeur (161) et de commander le codeur afin de recompresser les données d'image fournies à un second débit binaire inférieur au premier débit binaire,
le moyen de commande étant en outre configuré pour recevoir un réglage de temps de recompression indiquant quand les données d'image doivent être recompressées et le codeur est agencé pour mémoriser les données d'image résultant de la compression ou de la recompression dans le moyen de mémorisation (171) ;
**caractérisé par** :
le moyen de commande (181) étant configuré pour :
si le réglage de temps de recompression est un premier réglage, commander le codeur afin de recompresser immédiatement les données d'image numériques sélectionnées dès la réception du réglage de temps de recompression ; et
si le réglage de temps de recompression est un second réglage, enregistrer une liste (431) des données d'image numériques sélectionnées dans une mémoire (187) et commander au codeur de recompresser les données d'image dans la liste (431) quand l'appareil se trouve en mode de fonctionnement de veille,
dans lequel le moyen de commande (181) est en outre configuré pour recevoir une sélection par un utilisateur de l'une d'une pluralité de valeurs, présentées à l'utilisateur, du débit binaire auquel les données d'image sélectionnées doivent être recompressées.

2. Appareil (100) selon la revendication 1, comprenant en outre :
un moyen de conversion de signal d'entrée (131, 133) pour convertir les données d'image analogiques d'entrée reçues par l'appareil (100) en données d'image numériques et pour transmettre les données d'image numériques au codeur (161) ; et
un moyen de conversion de signal de sortie (135, 137) pour convertir les données d'image numériques produites en sortie par le décodeur (183) en données d'image analogiques,

3. Appareil (100) selon la revendication 1 ou 2, comprenant en outre un second moyen de commutation (150) pour commuter la destination de la sortie du décodeur (183) entre l'entrée du codeur (161) et le moyen de conversion de signal de sortie (135, 137), le second moyen de commutation (150) étant agencé pour commuter la destination de la sortie du décodeur (183) sur l'entrée du codeur (161) à la réception par l'appareil (100) d'un signal de commande de recompression.

4. Appareil (100) selon l'une quelconque des revendications précédentes, ledit appareil (100) étant exploitable pour mémoriser lesdites données compressées audit second débit binaire en remplacement desdites données compressées audit premier débit binaire.

5. Appareil (100) selon l'une quelconque des revendications précédentes, dans lequel les données compressées au premier débit binaire sont dans un format MPEG (Moving Picture Experts Group)-2, et les données compressées au second débit binaire sont dans un format MPEG-4.

6. Procédé de recompression de données dans un appareil d'enregistrement et de reproduction d'images (100), comprenant un codeur (161) pour compresser des données d'image numériques entrées depuis une source, un moyen de mémorisation (171) pour mémoriser des données compressées, et un décodeur (183) pour décompresser les données d'image compressées provenant du moyen de mémorisation (171) et produire en sortie des données d'image numériques, le procédé comprenant :
- un premier mode de fonctionnement dans lequel la source des données entrées dans le codeur (161) consiste en données d'image reçues par l'appareil (100) et les données reçues sont compressées à un premier débit binaire et mémorisées dans le moyen de mémorisation (171) ; et
la réception d'un réglage de temps de recompression indiquant quand les données d'image sélectionnées par un utilisateur, produites en sortie par le décodeur (183) qui ont été précédemment compressées au premier débit binaire, doivent être recompressées au second débit binaire ; et
le procédé comprenant, à un temps indiqué par le réglage de temps de recompression, un second mode de fonctionnement dans lequel :
la source des données d'image entrées dans le codeur (161) est commutée pour consister en les données d'image obtenues du moyen de mémorisation (171) et produites en sortie par le décodeur (183) ; et
les données d'image produites en sortie par le décodeur (183) sont recompressées au second débit binaire et mémorisées dans le moyen de mémorisation (171), le second débit binaire étant inférieur au premier débit binaire,
**caractérisé par** :
si le réglage de temps de recompression est un premier réglage, recompresser immédiatement les données d'image numériques sélectionnées dès la réception du réglage de temps de recompression ; et
si le réglage de temps de recompression est un second réglage, enregistrer une liste (431) des données d'image numériques sélectionnées dans une mémoire (187) et recompresser les données d'image numériques dans la liste (431) quand l'appareil se trouve en mode de fonctionnement de veille,
le procédé comprenant en outre la réception d'une sélection par un utilisateur de l'une d'une pluralité de valeurs, présentées à l'utilisateur, du débit binaire auquel les données sélectionnées doivent être recompressées.

7. Procédé selon la revendication 6, dans lequel les données compressées au premier débit binaire sont dans un format MPEG (Moving Picture Experts Group)-2, et les données compressées au second débit binaire sont dans un format MPEG-4.
